# FASCICULE DE BREVET EUROPEEN

(11) **EP 2 315 294 B1**
(45) Date de publication et mention de la délivrance du brevet: **15.01.2014**
(21) Numéro de dépôt: 10354062.1
(22) Date de dépôt: 12.10.2010
(51) Int. Cl.: H01M 2/02, H01M 4/66, H01M 10/052, H01M 10/0525, H01M 10/04, H01M 10/0585

(54) **Micro-batterie au lithium munie d'une couche d'encapsulation conductrice électroniquement**
Lithium-Mikrobatterie umfassend eine elektronich leitende Hüllschicht
Lithium micro-battery comprising an electronically conducting encapsulating layer

(30) Priorité: 26.10.2009 FR 0905133
(43) Date de publication de la demande: 27.04.2011
(73) Titulaire: Commissariat à l'Énergie Atomique et aux Énergies Alternatives, 75015 Paris (FR)
(72) Inventeur: Bedjaoui, Messaoud, 38130 Echirolles (FR); Martin, Steve, 38160 Saint-Sauveur (FR); Salot, Raphaël, 38250 Lans-en-Vercors (FR)
(74) Mandataire: Dubreu, Sandrine

(56) Documents cités:
- EP-A1- 2 166 609
- WO-A2-2006/061696
- WO-A2-2007/061928
- US-A- 3 353 999
- US-A1- 2009 181 303

## Description

### Domaine technique de l'invention

L'invention concerne une micro-batterie au lithium comprenant une couche mince d'encapsulation en matériau polymère et un collecteur de courant anodique.

### État de la technique

Une micro-batterie au lithium comprend, en général, un empilement de couches minces solides, déposées successivement sur un substrat, par des techniques de dépôt conventionnelles, utilisées dans le domaine de la microélectronique. Un empilement d'une micro-batterie au lithium comporte, en particulier :
- des collecteurs de courant métallique, par exemple en titane, en platine ou en tungstène,
- une électrode positive (ou cathode), conductrice à la fois électronique et ionique, par exemple en oxysulfure de titane (« TiOS »), en TiS₂ ou en V₂O₅,
- un électrolyte solide, par exemple en LiPON
- et une électrode négative (ou anode).

Selon la nature de l'anode, les micro-batteries au lithium sont, en général, classées en deux types de batteries :
- les batteries dites « Li-métal » pour des électrodes négatives constituées de lithium métallique,
- et les batteries dites « Li-ion » pour des électrodes négatives formées par des matériaux d'insertion du lithium, par exemple en silicium ou en germanium.

Par ailleurs, la micro-batterie est, en général, recouverte par au moins une couche mince d'encapsulation étanche, protégeant l'empilement de couches minces précitées. En effet, il est bien connu que le lithium est très sensible à l'air et à l'humidité. Une couche mince d'encapsulation doit donc être prévue dans une micro-batterie au lithium, pour protéger les couches minces actives de la micro-batterie au lithium contre d'éventuels contaminants de l'environnement extérieur (eau, air...). En général, cette couche mince d'encapsulation permet, aussi, de compenser les expansions volumiques de la micro-batterie, lors des cycles de charge et de décharge. Sans la présence d'une couche mince d'encapsulation, l'expansion et/ou la contraction des composants de la micro-batterie pourraient en effet provoquer des dommages mécaniques à l'électrode comprenant du lithium, ce qui conduirait à une perte rapide de la capacité en cyclage.

Une telle couche mince d'encapsulation pour micro-batterie est habituellement sous la forme d'une monocouche mince en matériau organique, afin d'une part de limiter les défauts liés à la rugosité du substrat sur lequel est disposé l'empilement de couches minces et d'autre part de faciliter l'accommodation des déformations de l'anode lors du cyclage de la micro-batterie.

Selon la configuration de la micro-batterie au lithium, la couche mince d'encapsulation peut être disposée directement sur l'anode ou bien sur le collecteur de courant anodique ou bien sur une couche métallique équivalente assurant la connexion électrique entre l'anode et un collecteur de courant anodique. Dans tous les cas, elle recouvre totalement l'empilement de couches minces de la micro-batterie au lithium.

De plus, le matériau organique constituant la couche mince d'encapsulation est, en général, choisi pour lui permettre de répondre à ses fonctions d'encapsulation, d'étanchéité par rapport aux contaminants extérieurs, d'accommodation des déformations de la micro-batterie... Le matériau doit ainsi, présenter au moins les propriétés suivantes :
- bonne résistance thermique (supérieure à 260°C)
- très bonne souplesse mécanique,
- compatibilité chimique et forte adhérence avec les constituants actifs de la micro-batterie et avec le lithium.

Par ailleurs, d'autres couches peuvent être associées à la couche mince d'encapsulation en matériau organique pour protéger la micro-batterie au lithium, telles que des couches minces en matériaux diélectriques (Al₂O₃, SiO₂, Si₃N₄...) ou des couches métalliques (Ti, Cu, Al...). Cet ensemble de couches minces forment alors un système d'encapsulation.

À titre d'exemple et comme illustrée sur la figure 1, dans la demande de brevet WO-A-2008/011061, une batterie au lithium est formée sur un substrat 1, par un empilement successif d'un collecteur de courant cathodique 2, d'une cathode 3, d'un électrolyte solide 4 et d'une couche 5 collectrice de courant anodique. Dans certains modes de réalisation, une anode peut être déposée initialement entre ladite couche 5 et l'électrolyte solide 4 tandis que, dans d'autres modes de réalisation, l'anode sera réalisée in situ, pendant la première charge de la batterie. Dans la demande WO-A-2008/011061, la couche collectrice de courant 5 est, par ailleurs, recouverte d'un matériau encapsulant 6 formant la couche mince d'encapsulation et d'une couche métallique 7. La couche métallique 7 est mise en contact avec le collecteur de courant anodique 5, par l'intermédiaire d'un via ou d'un trou 8, à travers le matériau encapsulant 6 afin d'assurer la reprise de contact anodique. Elle est, par exemple, en aluminium ou en cuivre et elle empêche la migration des contaminants externes dans la structure active de la batterie. Le matériau encapsulant 6 permet, quant à lui, d'aplanir les défauts de surface ainsi que les aspérités. Il est, par exemple, formé d'une ou de plusieurs couches en matériau organique, tel qu'un silicone, un polyimide ou un époxy.

Dans la demande de brevet WO-02/47187 et comme illustré sur la figure 2, une micro-batterie au lithium est constituée d'un empilement de couches minces formé sur un substrat 1 et comprenant successivement des collecteurs de courant 2 et 5, une cathode 3, un électrolyte solide 4 et une anode 9. De plus, cet empilement de couches minces est recouvert d'une couche métallique 10 prolongeant le collecteur de courant anodique 5, de deux couches minces 11 et 12, respectivement en oxyde d'aluminium et en oxyde de silicium et d'une couche mince 13, en résine époxy constituant la couche mince d'encapsulation.

Le document US 2009/181303 décrit une micro-batterie au lithium comprenant une couche mince d'encapsulation et un collecteur de courant anodique. La couche mince d'encapsulation, qui peut être électriquement conductrice et servir de collecteur de courant, est composée d'un laminat métal-polymère.

### Objet de l'invention

L'invention a pour but de proposer une micro-batterie au lithium améliorée par rapport aux micro-batteries selon l'art antérieur.

En particulier, l'invention a pour but une micro-batterie dont la réalisation est simplifiée, avec des coûts de fabrication peu élevés par rapport à l'état de la technique tout en étant correctement protégée.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

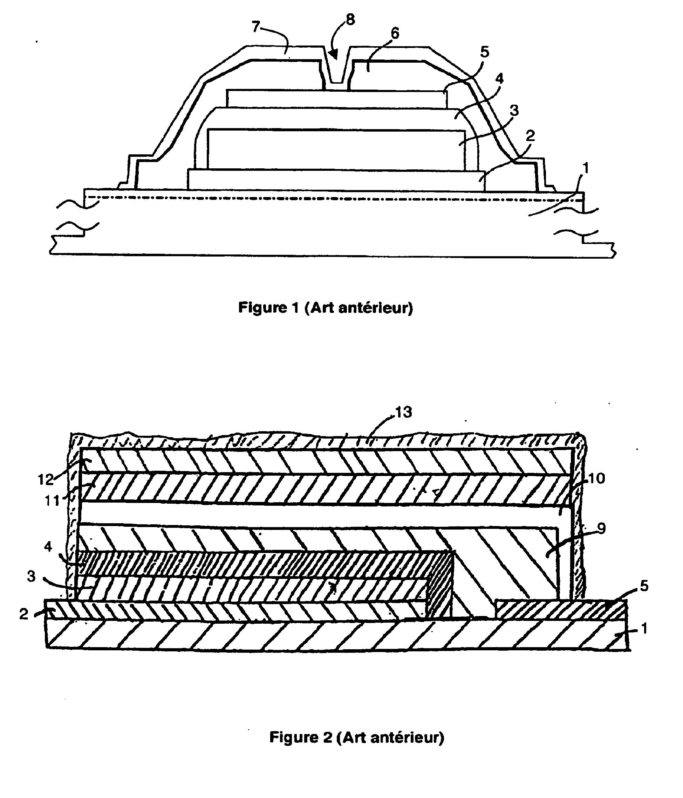

- les figures 1 et 2 représentent schématiquement des première et seconde micro-batteries au lithium selon l'art antérieur.
- la figure 3 illustre en coupe un mode de réalisation particulier d'une micro-batterie au lithium selon l'invention.

### Description de modes particuliers de réalisation

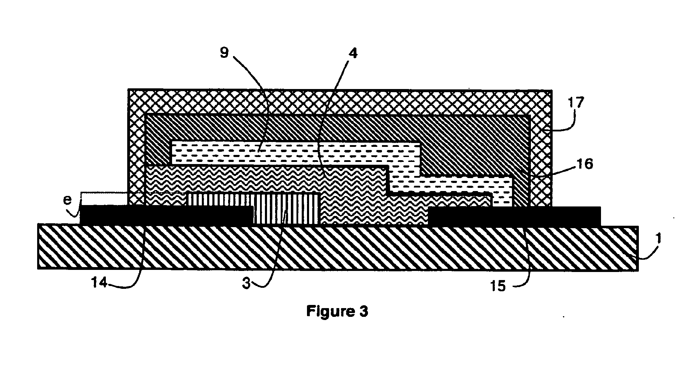

Selon un mode de réalisation représenté sur la figure 3, une micro-batterie au lithium comprend un substrat 1, dont une surface est en partie recouverte par un empilement multicouche formant les parties actives de la micro-batterie et par au moins une couche mince permettant de protéger les parties actives de la micro-batterie.

Le substrat 1 est, par exemple, constitué par du silicium. Le substrat 1 peut aussi, dans certains cas, contenir un circuit intégré (non représenté sur la figure 3) ou bien il peut, dans une variante de réalisation, être remplacé par un support métallique.

Sur la figure 3, l'empilement multicouche formant les parties actives de la micro-batterie comprend successivement :
- deux couches minces métalliques 14 et 15, directement disposées sur la surface du substrat 1,
- une couche mince formant l'électrode positive ou cathode 3,
- un électrolyte solide 4
- et une couche mince formant l'électrode négative ou anode 9.

Les deux couches minces métalliques 14 et 15 sont directement disposées sur la surface du substrat 1 et elles sont séparées l'une de l'autre, afin de ne pas être en contact l'une avec l'autre. Elles forment au moins en partie les collecteurs de courant, respectivement cathodique et anodique de la micro-batterie. Les deux couches minces métalliques 14 et 15 peuvent, par exemple, être formées sur le substrat 1 par dépôt physique en phase vapeur (PVD) ou par dépôt chimique en phase vapeur (CVD), à l'aide d'un masque permettant de déterminer leur forme. Avantageusement, les deux couches minces métalliques 14 et 15 ont, chacune, une épaisseur d'environ 200 nm. Elles peuvent, par exemple, être constituées par un métal choisi parmi le titane, le platine, le tungstène et l'or. Dans le mode de réalisation représenté sur la figure 3, la couche mince métallique 14 constitue plus particulièrement le collecteur de courant cathodique, tandis que la couche mince métallique 15 forme une partie du collecteur de courant anodique.

La cathode 3 recouvre sur la figure 3 une partie de la couche mince métallique 14 et une partie de la surface du substrat 1 disposée entre les deux couches minces métalliques 14 et 15. La cathode 3 est, avantageusement sous la forme d'une couche mince dont l'épaisseur e de la partie active de la cathode, c'est-à-dire la partie en contact avec la couche mince métallique 14, est d'environ 1,5µm. La cathode 3 est, par exemple, constituée par un oxysulfure de titane (TiOS), par du pentoxyde de vanadium (V₂O₅) ou par du disulfure de titane (TiS₂). Elle peut être déposée par PVD ou bien par CVD, par masquage mécanique ou par photolithographie.

L'électrolyte solide 4 recouvre, sur la figure 3, une partie de la couche mince métallique 14, la totalité de la cathode 3, la partie libre du substrat 1 disposée entre le collecteur de courant cathodique 14 et la couche mince métallique 15 ainsi qu'une partie de la couche mince métallique 15. L'électrolyte 4 comporte au moins un composé lithié, tel que l'oxynitrure de phosphore et de lithium (connu sous le nom de LiPON). Il est, avantageusement, sous la forme d'une couche mince ayant une épaisseur moyenne de l'ordre de 1,5 µm, déposée par exemple par PVD ou CVD.

L'anode 9 recouvre, sur la figure 3, une majeure partie de l'électrolyte solide 4 et elle est mise en contact avec la couche mince métallique 15. Elle est, par exemple, constituée par une couche mince, en lithium métallique, d'une épaisseur de l'ordre de 3,5 *µ*m et déposée par évaporation à travers un masque mécanique.

L'empilement multicouche, formant les parties actives de la micro-batterie au lithium, est recouvert par une couche mince d'encapsulation 16 comprenant un matériau polymère.

Ainsi, sur la figure 3, la couche mince d'encapsulation 16 recouvre totalement l'anode 9 ainsi que la partie de l'électrolyte solide 4 non recouverte par l'anode 9 et une partie de la couche mince métallique 15. La couche mince d'encapsulation 16 permet, comme les couches d'encapsulation décrites dans l'art antérieur, d'encapsuler et de protéger, de manière étanche, à l'air et à l'eau, les parties actives de la micro-batterie au lithium.

La couche mince d'encapsulation 16 n'est, par contre, pas en contact avec la cathode 3 ni avec le collecteur de courant cathodique 14. En effet, cette couche mince d'encapsulation 16 présente la particularité d'avoir une bonne conduction électronique, ce qui permet de collecter le courant anodique et donc de former une reprise de contact anodique. Ainsi, la couche mince d'encapsulation 16 constitue une partie du collecteur de courant anodique.

Ainsi, dans le mode de réalisation représenté sur la figure 3, la couche mince d'encapsulation 16 forme, avec la couche mince métallique 15, le collecteur de courant anodique. Dans d'autres modes de réalisation, la couche mince d'encapsulation 16 pourrait constituer la totalité du collecteur de courant anodique. La couche mince d'encapsulation 16 a, avantageusement, une épaisseur comprise entre environ 2*µ*m et environ 15 *µ*m.

Ainsi, le fait de réaliser une couche mince unique ou monocouche, formant à la fois la couche mince d'encapsulation et au moins une partie d'un collecteur de courant anodique, permet de simplifier la réalisation des micro-batteries au lithium et d'en réduire le coût de fabrication. En effet, l'emploi d'une couche mince unique, servant à la fois d'encapsulation 16 et moyens de conduction électronique anodique, permet de résoudre les problèmes complexes liés :
- à la relaxation des contraintes mécaniques s'exerçant sur la batterie et en partie provoqués par les changements volumiques lors des cycles de charge et de décharge,
- à la planarisation de la topologie de surface de l'empilement multicouche,
- à l'adhérence des couches minces entre elles
- et à la connexion électrique du côté de l'anode.

La conduction électronique de la couche mince d'encapsulation 16 est apportée par l'introduction de particules métalliques dans une matrice en matériau polymère. Les particules métalliques sont, ainsi, dispersées dans la matrice polymère, afin d'en augmenter significativement la conduction électronique.

Le matériau polymère est, plus particulièrement, choisi de manière à conserver la fonction initiale et connue d'une couche mince d'encapsulation en matériau polymère, c'est-à-dire celle de protéger hermétiquement les parties actives de la micro-batterie au lithium contre les contaminants extérieurs et d'absorber la variation volumique de l'empilement susceptible de se produire lors des cycles de charge/décharge de la micro-batterie.

Le matériau polymère doit aussi être compatible chimiquement avec le lithium et/ou les composants lithiés et être compatible avec les techniques mises en oeuvre pour réaliser les parties actives de la micro-batterie. En effet, avant sa mise en service, une micro-batterie au lithium peut subir plusieurs traitements thermiques à des températures de l'ordre de 260°C. Le matériau polymère de la couche mince d'encapsulation doit, par conséquent, être un élément stable tant chimiquement que thermiquement, afin que la micro-batterie reste efficace. C'est, d'ailleurs, la raison pour laquelle il n'a pas été envisagé de réaliser la couche mince d'encapsulation avec un matériau polymère présentant intrinsèquement une conduction électronique élevée. En effet, l'usage de polymères conducteurs conventionnels, tels que le polyacétylène, le polythiophène, le polypyrole, le polysulfure de phénylène, s'avère être limité pour réaliser une micro-batterie au lithium. Ces polymères sont, en effet, difficiles à mettre en oeuvre. Ils peuvent, de plus, être incompatibles avec les étapes de réalisation d'une micro-batterie au lithium, du fait de leur faible résistance à la température (moins de 200°C) et de leur forte réactivité chimique avec le lithium et les composants lithiés.

Ainsi, le matériau polymère formant la matrice de la couche mince d'encapsulation 16 peut être, avantageusement, un polyépoxyde aromatique, obtenu à partir d'au moins un matériau précurseur photopolymérisable, tel que :
- le diglycidyléther du bisphénol A, vendu par la société Epoxy Technology sous le nom commercial « Epo-Tek OG142-13 »,
- le butanediol diglycidil éther du bisphénol F, vendu par la société Epoxy Technology sous le nom commercial « Epo-Tek OG115 »
- le 7-oxabicylco[4.1.0]heptane-3-carboxylate de 7-oxabicylco[4.1.0]hept-3-ylméthyle, vendu par la société Epoxy Technology sous le nom commercial « 90-87-6 »,
- un mélange de bisphénol A et d'épichlorydine (ou 1-chloro-2,3-époxypropane) tel que les produits OG114-4 ou OG125 vendu par la société

Epoxy Technology (les deux produits OG114-4 ou OG125 différent par le rapport entre les proportions en bisphénol A et en épichlorydine).

Le matériau polymère peut aussi être un copolymère obtenu à partir d'un mélange homogène d'au moins deux matériaux précurseurs photopolymérisables, respectivement à base d'acrylate et à base d'époxyde. Dans ce cas, l'acrylate est avantageusement choisi parmi le diacrylate 1,6-hexanediol et le méthacrylate. L'époxyde est, avantageusement, choisi parmi le diglycidyléther du bisphénol A, le 7-oxabicylco[4.1.0]heptane-3-carboxylate de 7-oxabicylco[4.1.0]hept-3-ylméthyle et un mélange de bisphénol A et d'épichlorydine, par exemple l'OG114-4.

Il est à noter que le terme « matériau précurseur photopolymérisable » utilisé ci-dessus qualifie, dans la présente demande, toute molécule capable de donner par l'action d'un rayonnement lumineux, tel que qu'un rayonnement ultraviolet, le matériau polymère en question. Ainsi, il peut s'agir d'un ou plusieurs monomères destinés à être photopolymérisés ou bien il peut s'agir d'une ou de plusieurs entités déjà polymérisées et destinées à être photoréticulées.

Les polyépoxydes aromatiques ainsi que les copolymères obtenus à partir d'un acrylate et d'un époxyde, tels que ceux mentionnés ci-dessus présentent, en effet, l'avantage d'être compatibles avec la technologie mise en oeuvre pour réaliser une micro-batterie au lithium. Leur emploi facilite, de plus, la réalisation de la micro-batterie, dans la mesure où ils peuvent avantageusement être formés par application d'un rayonnement lumineux, tel qu'un rayonnement ultraviolet.

Les particules métalliques introduites dans la matrice en polymère organique peuvent, avantageusement, être constituées par au moins un métal noble choisi parmi l'argent, l'or et le cuivre. En effet, les métaux nobles, tels que l'argent, l'or et le cuivre, présentent l'avantage d'être inertes chimiquement vis-à-vis du lithium. Ce sont, de plus, des métaux qui présentent une très bonne conductivité électrique et ils sont compatibles avec des procédés d'assemblages utilisés dans le domaine de la microélectronique tels que le soudage par fils (ou « wire bonding » en anglais), le soudage par écrasement de boule (ou « ball bonding » en anglais) et le soudage en coin (ou « wedge bonding » en anglais). Les particules métalliques peuvent, aussi, être constituées par au moins un autre métal, inoxydable ou très résistant à l'oxydation, tel que le platine, le palladium, le tungstène, le molybdène, le zirconium et le tantale.

De plus, les particules métalliques introduites dans la matrice en matériau polymère ont, avantageusement, un diamètre moyen micrométrique et encore, plus avantageusement, compris entre environ 1 µm et environ 15 µm.

Enfin, la quantité de particules métalliques introduite dans la matrice polymère pour former la couche mince d'encapsulation 16 dépend de la nature du matériau polymère employé, ainsi que de la nature et des dimensions des particules métalliques. En particulier, la couche mince d'encapsulation 16 comprend, avantageusement, au moins 80% en poids de particules métalliques par rapport au poids des matériaux constituant la couche mince d'encapsulation, c'est-à-dire par rapport au poids total formé par le matériau polymère et les particules métalliques. De manière conventionnelle, le poids total dudit matériau est considéré comme sensiblement égal à celui du mélange formé par le (ou les) précurseur(s) photopolymérisable(s) et par les particules métalliques, lorsque le polymère est obtenu à partir d'un (ou de) précurseur(s) photopolymérisable(s). Enfin, la quantité en particules métalliques introduites dans la matrice est suffisante pour que les particules métalliques soient en contact les unes avec les autres et donc garantir la conduction électronique dans la couche mince d'encapsulation 16.

Ainsi, la quantité de particules métalliques introduite dans la matrice polymère et la taille des particules métalliques sont deux facteurs importants à prendre en compte pour obtenir une conduction électronique suffisante ainsi qu'une bonne polymérisation. Ils déterminent, en effet, la bonne dispersion des particules métalliques dans la matrice en matériau polymère et évitent une accumulation des charges dans une zone particulière de la matrice.

Ainsi, la conductivité électronique obtenue en introduisant des particules métalliques dans une matrice en matériau polymère est de 10¹³ à 10¹⁶ fois supérieure à la conductivité électronique du matériau polymère. Par contre, il a, de plus, été constaté qu'un tel ajout permet de garder la souplesse mécanique de la matrice en matériau polymère. Ainsi, les propriétés d'aplanissement de topographie de surface nécessaires pour une encapsulation haute performance de la micro-batterie au lithium sont assurées grâce à la présence du polymère, typiquement de type polyépoxyde aromatique ou copolymère à base d'époxy et d'acrylate.

À titre d'exemple, une matrice polymère formée à partir de l'époxyde OG114-4 et comprenant entre 80% et 90% en poids de particules d'argent ayant un diamètre moyen compris entre 1 µm et 15 µm présente une conductivité électronique variant entre 10⁶ et 10⁷ S.m⁻¹, alors que la même matrice polymère sans particules métalliques aurait une conductivité électronique de l'ordre de 10⁻⁷ à 10⁻⁸ S.m⁻¹. Il a, par ailleurs, été constaté qu'ajouter une trop grande quantité de particules d'argent (au-delà de 90% en poids par rapport au poids total) à l'époxyde OG114-4 rend le mélange ainsi formé difficile à mettre en oeuvre par photopolymérisation.

Ainsi, la réalisation de la couche mince d'encapsulation 16 peut, avantageusement être réalisée à partir d'un mélange formé par un (ou plusieurs) précurseur(s) photopolymérisable(s) du matériau polymère et par les particules métalliques. Un tel mélange, en général sous forme de particules mises en suspension dans une solution liquide, peut alors être déposé sur l'empilement multicouche par tout type de techniques connues. Par exemple, le mélange peut être déposé :
- par sérigraphie,
- par pulvérisation,
- par impression par jet d'encre,
- par trempage, plus connu sous le nom anglo-saxon de « deep coating »,
- par micro-dispersion ou « microdispensing » en anglais
- ou encore avantageusement par dépôt à la tournette (« spin coating » en anglais).

Dans le cas du dépôt à la tournette, le mélange, une fois déposé, est solidifié (ou durci). Ceci peut être réalisé par voie thermique (traitement thermique à environ 150°C pendant 15 minutes) ou bien, avantageusement, par exposition à un rayonnement ultraviolet (λ = 300-500nm) avec une densité de puissance de 100 mW/cm2, pendant 1 à 2 minutes. Dans le cas du durcissement par rayonnement UV, l'épaisseur de la couche mince d'encapsulation est, avantageusement, de l'ordre de 8µm à 10 µm.

À titre d'exemple, la couche mince d'encapsulation 16 représentée sur la figure 3 peut être réalisée en mélangeant 10g du précurseur liquide photopolymérisable OG114-4 avec 90g de particules d'argent présentant un diamètre moyen de l'ordre de 6 µm. Le mélange est agité pendant environ 10 minutes, avec une vitesse d'agitation comprise entre 50 et 100 tr/mn. Le mélange est, ensuite étalé sur la totalité de l'empilement multicouche, par exemple par une technique de dépôt à la tournette, également connue sous le nom anglo-saxon « spin coating » (3000tr/mn). Puis, un rayonnement ultraviolet est appliqué localement avec une densité de puissance de 100mW/cm², pendant une durée d'une minute, à travers un masque comprenant un motif prédéterminé. La couche mince d'encapsulation 16 formée a, par exemple, une épaisseur de l'ordre de 10 *µ*m.

Dans une variante de réalisation, la couche mince d'encapsulation 16 peut être réalisée en mélangeant 10g d'une solution formée par deux précurseurs, respectivement l'époxyde photopolymérisable connu sous le nom OG114-4 et de l'hexanediol diacrylate, avec 90g de particules d'or de diamètre moyen de l'ordre de 3µm. Le mélange est agité entre 50 et 100 tr/min pendant 10 minutes. Il est, ensuite, déposé, sur la totalité de l'empilement par dépôt à la tournette (4000 tr/mn) et une exposition à un rayonnement ultraviolet est réalisée de manière localisée, à travers un masque pendant 2 minutes, avec une densité de puissance de 100mW/cm². La couche mince d'encapsulation 16 formée a, par exemple, une épaisseur de l'ordre de 8 *µ*m.

Comme illustré sur la figure 3, d'autres couches minces peuvent recouvrir l'empilement multicouche formant les parties actives de la micro-batterie au lithium. Ainsi, la couche mince d'encapsulation 16 est, sur la figure 3, recouverte par une couche mince barrière 17, dont le rôle est d'empêcher la diffusion à la vapeur d'eau. Ainsi, cette couche mince barrière 17 peut être de nature diélectrique, avec avantageusement une épaisseur d'une centaine de nanomètres, déposée par PVD ou CVD. Elle peut, par exemple, être en silice, en oxyde de silicium, en oxynitrure... Sur la figure 3, elle recouvre la totalité de la couche mince d'encapsulation et elle est en contact avec les couches minces métalliques 14 et 15.

Dans une variante de réalisation, la couche mince barrière 17 peut être de nature métallique, avec avantageusement une épaisseur de 200 nm. La couche mince barrière 17 peut, dans ce cas, être en titane, en tungstène, en nickel, en chrome ou en un alliage métallique. Elle est avantageusement déposée par une technique PVD ou par évaporation en utilisant le même masque que celui utilisé pour réaliser la couche mince d'encapsulation 16, afin d'éviter, dans ce cas, un contact avec le collecteur de courant cathodique 14.

## Revendications

1. Micro-batterie au lithium comprenant une couche mince d'encapsulation (16) en matériau polymère et un collecteur de courant anodique, caractérisée en que la couche mince d'encapsulation (16) est constituée par une matrice en matériau polymère dans laquelle sont dispersées des particules métalliques et en ce que la couche mince d'encapsulation constitue au moins une partie du collecteur de courant anodique de la micro-batterie au lithium.

2. Micro-batterie selon la revendication 1, **caractérisée en ce que** le matériau polymère est un polyépoxyde aromatique.

3. Micro-batterie selon la revendication 2, **caractérisée en ce que** le matériau polymère est obtenu à partir d'au moins un matériau précurseur photopolymérisable choisi parmi le diglycidyléther du bisphénol A, le butanediol diglycidil éther du bisphénol F, le 7-oxabicylco[4.1.0]heptane-3-carboxylate de 7-oxabicylco[4.1.0]hept-3-ylméthyle et un mélange de bisphénol A et d'épichlorydine.

4. Micro-batterie selon la revendication 1, **caractérisée en ce que** le matériau polymère est un copolymère obtenu à partir d'un mélange homogène d'au moins deux matériaux précurseurs photopolymérisables, respectivement à base d'acrylate et à base d'époxyde.

5. Micro-batterie selon la revendication 4, **caractérisée en ce que** l'acrylate est choisi parmi le diacrylate 1,6-hexanediol et le méthacrylate.

6. Micro-batterie selon l'une des revendications 4 et 5, **caractérisée en ce que** l'époxyde est choisi parmi le diglycidyléther du bisphénol A, le 7-oxabicylco[4.1.0]heptane-3-carboxylate de 7-oxabicylco[4.1.0]hept-3-ylméthyle et un mélange de bisphénol A et d'épichlorydine.

7. Micro-batterie selon l'une quelconque des revendications 1 à 6, **caractérisée en ce que** les particules métalliques sont constituées par un métal choisi parmi l'argent, l'or, le cuivre, le platine, le palladium, le tungstène, le molybdène, le zirconium et le tantale.

8. Micro-batterie selon l'une quelconque des revendications 1 à 7, **caractérisée en ce que** les particules métalliques ont un diamètre moyen compris entre environ 1 µm et environ 15 µm.

9. Micro-batterie selon l'une quelconque des revendications 1 à 8, **caractérisée en ce que** la couche mince d'encapsulation (16) comprend au moins 80% en poids de particules métalliques par rapport au poids total des matériaux constituant la couche mince d'encapsulation (16).

10. Micro-batterie selon l'une quelconque des revendications 1 à 9, **caractérisée en ce que** la couche mince d'encapsulation (16) a une épaisseur comprise entre environ 2µm et environ 15µm.

## Patentansprüche

1. Lithium-Mikrobatterie, umfassend eine dünne Verkapselungsschicht (16) aus Polymermaterial und einen Anodenstromkollektor, **dadurch gekennzeichnet, dass** die dünne Verkapselungsschicht (16) durch eine Matrix aus Polymermaterial gebildet ist, in der Metallpartikel fein verteilt sind, und dass die dünne Verkapselungsschicht wenigstens einen Teil des Anodenstromkollektors der Lithium-Mikrobatterie bildet.

2. Mikrobatterie nach Anspruch 1, **dadurch gekennzeichnet, dass** das Polymermaterial ein aromatisches Polyepoxid ist.

3. Mikrobatterie nach Anspruch 2, **dadurch gekennzeichnet, dass** das Polymermaterial aus wenigstens einem fotopolymerisierbaren Vorläufermaterial, das aus Bisphenol A-Diglycidylether, Bisphenol F-Butandioldiglycidylether, 7-Oxabicyclo[4.1.0]hept-3-ylmethyl-7-oxabicyclo[4.1.0]beptane-3-carboxylat sowie einer Mischung aus Bisphenol A und Epichlorydin ausgewählt ist, erhalten wird.

4. Mikrobatterie nach Anspruch 1, **dadurch gekennzeichnet, dass** das Polymermaterial ein Copolymer ist, das aus einem homogenen Gemisch aus wenigstens zwei fotopolymerisierbaren Vorlaufermaterialien auf Arcylatbasis bzw. auf Epoxidbasis erhalten wird

5. Mikrobatterie nach Anspruch 4, **dadurch gekennzeichnet, dass** das Acrylat aus 1,6-Hexandiol-diacrylat und Methacrylat ausgewählt ist.

6. Mikrobatterie nach einem der Ansprüche 4 und 5, **dadurch gekennzeichnet, dass** das Epoxid aus Bisphenol A-Diglycidylether, 7-Oxabicyclo[4.1.0]hept-3-ylmethyl-7-oxabicyclo[4.1.0]heptane-3-carboxylat sowie einer Mischung aus Bisphenol A und Epichlorydin ausgewählt ist.

7. Mikrobatterie nach einem der Ansprüche 1 bis 6, **dadurch gekennzeichnet, dass** die Metallpartikel von einem Metall, welches aus Silber, Gold, Kupfer, Platin, Palladium, Wolfram, Molybdän, Zirkonium und Tantal ausgewählt ist, gebildet sind.

8. Mikrobatterie nach einem der Ansprüche 1 bis 7, **dadurch gekennzeichnet, dass** die Metallpartikel einen mittleren Durchmesser zwischen etwa 1 µm und etwa 15 µm aufweisen.

9. Mikrobatterie nach einem der Ansprüche 1 bis 8, **dadurch gekennzeichnet, dass** die dünne Verkapselungsschicht (16) wenigstens 80 Gew.-% Metallpartikel bezogen auf das Gesamtgewicht der die dünne Verkapselungsschicht (16) bildenden Materialien umfasst.

10. Mikrobatterie nach einem der Ansprüche 1 bis 9, **dadurch gekennzeichnet, dass** die dünne Verkapselungsschicht (16) eine Dicke im Bereich zwischen etwa 2 µm und etwa 15 µm aufweist.

## Claims

1. A lithium microbattery comprising a packaging thin layer (16) and an anodic current collector, **characterized in that** the packaging thin layer (16) consists of a matrix formed by a polymer material and of metallic particles dispersed within the matrix, and **in that** the packaging thin layer constitutes at least a part of the anodic current collector of the lithium microbattery.

2. The microbattery according to claim 1, wherein the polymer material is an aromatic polyepoxide.

3. The microbattery according to claim 2, wherein the polymer material is obtained from at least a photopolymerizable precursor material selected from the group consisting of bisphenol A diglycidylether, bisphenol F butanediol diglycidyl ether, 7-oxabicyclo[4.1.0]heptane-3-carboxylate of 7-oxabicyclo[4.1.0]hept-3-ylmethyl and a mixture of bisphenol A and epichlorohydrin.

4. The microbattery according to claim 1, wherein the polymer material is a copolymer obtained from a homogeneous mixture of at least two photopolymerizable precursor materials, respectively an acrylate-base material and an epoxide-base material.

5. The microbattery according to claim 4, wherein the acrylate-base material is selected from the group consisting of diacrylate 1,6-hexanediol and methacrylate.

6. The microbattery according to one of the claims 4 and 5, wherein the epoxide-base material is selected from the group consisting of bisphenol A diglycidylether, 7-oxabicylco[4.1.0]heptane-3-carboxylate of 7-oxabicylco[4.1.0]hept-3-ylmethyl and a mixture of bisphenol A and epichlorohydrin.

7. The microbattery according to one of the claims 1 to 6, wherein the metallic particles consist of a metal selected from the group consisting of silver, gold, copper, platinum, palladium, tungsten, molybdenum, zirconium and tantalum.

8. The microbattery according to one of the claims 1 to 7, wherein the metallic particles have a mean diameter comprised between about 1 µm and about 15 µm.

9. The microbattery according to one of the claims 1 to 8, wherein the packaging thin layer (16) comprises at least 80% by weight of metallic particles with respect to the total weight of materials constituting the packaging thin layer (16).

10. The microbattery according to one of the claims 1 to 9, wherein the packaging thin layer (16) has a thickness comprised between about 2µm and about 15µm.
